# EUROPÄISCHE PATENTSCHRIFT

(11) **EP 1 290 945 B1**
(45) Veröffentlichungstag und Bekanntmachung des Hinweises auf die Patenterteilung: **31.03.2004**
(21) Anmeldenummer: 02026751.4
(22) Anmeldetag: 19.01.1999
(51) Int. Cl.: A01N 47/38

(54) **Herbizides Mittel**
Herbicidal composition
Composition herbicide

(30) Priorität: 21.01.1998 CH 13598
(43) Veröffentlichungstag der Anmeldung: 12.03.2003
(62) Teilanmeldung aus: 99100891.3
(73) Patentinhaber: Syngenta Participations AG, 4058 Basel (CH)
(72) Erfinder: Glock, Jutta, 4322 Mumpf (CH); Cornes, Derek, 4142 Münchenstein (CH)
(74) Vertreter: Bastian, Werner Maria

(56) Entgegenhaltungen:
- EP-A- 0 507 171

## Beschreibung

Die vorliegende Erfindung betrifft neue selektiv-herbizide Mittel zur Bekämpfung von Gräsern und Unkräutern in Kulturen von Nutzpflanzen, insbesondere in Kulturen von Getreide und Reis, welche ein Herbizid und einen Safener (Gegenmittel, Antidot) enthalten und welche die Nutzpflanzen, nicht aber die Unkräuter vor der phytotoxischen Wirkung des Herbizides bewahren, sowie die Verwendung dieses Mittels zur Unkrautbekämpfung in Nutzpflanzenkulturen.

Beim Einsatz von Herbiziden können z.B. in Abhängigkeit von der Dosis des Herbizids und der Applikationsart, der Kulturpflanze, der Bodenbeschaffenheit und den klimatischen Bedingungen, wie Belichtungsdauer, Temperatur und Niederschlagsmengen auch die Kulturpflanzen in erheblichem Maße geschädigt werden.

Um diesem und ähnlichen Problemen zu begegnen, sind schon verschiedene Stoffe als Safener vorgeschlagen worden, welche befähigt sind, die schädigende Wirkung des Herbizids auf die Kulturpflanze zu antagonisieren, das heißt, die Kulturpflanze davor zu schützen, wobei aber die Herbizidwirkung auf die zu bekämpfenden Unkräuter praktisch nicht beeinträchtigt wird. Dabei hat es sich gezeigt, daß die vorgeschlagenen Safener sowohl bezüglich der Kulturpflanzen als auch bezüglich des Herbizids und teilweise auch in Abhängigkeit von der Applikationsart oft sehr spezifisch wirken, das heißt, ein bestimmter Safener eignet sich oft nur für eine bestimmte Kulturpflanze und eine spezielle Herbizidstoffklasse oder ein bestimmtes Herbizid. So sind z.B. aus WO 97/18712 Verbindungen bekannt, die Kulturpflanzen vor der phytotoxischen Wirkung von speziellen Herbiziden schützen. Es wurde nun gefunden, daß sich Verbindungen der Formel IIb 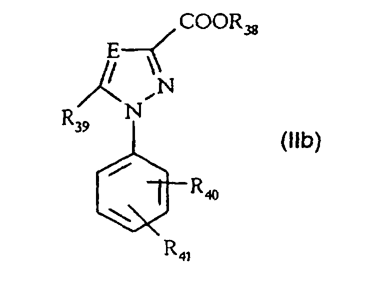 worin die Substituenten die unten genannten Bedeutungen besitzen, zum Schützen von Kulturpflanzen vor der phytotoxischen Wirkung der Verbindung der Formel I 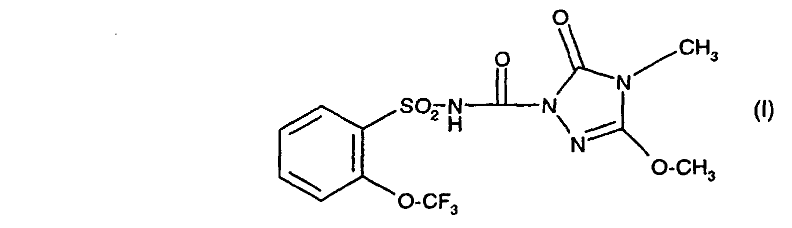 eignen.

Erfindungsgemäß wird somit ein selektiv-herbizides Mittel vorgeschlagen, welches dadurch gekennzeichnet ist, daß es neben üblichen inerten Formulierungshilfsmitteln wie Trägerstoffen, Lösungsmitteln und Netzmitteln als Wirkstoff eine Mischung aus
a) einer herbizid-wirksamen Menge des Herbizids der Formel I 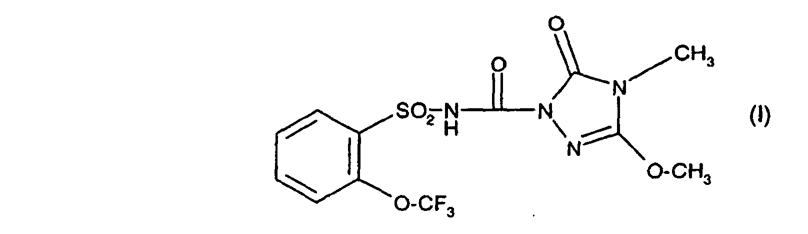 und
b) einer herbizid-antagonistisch wirksamen Menge eines Safeners der Formel IIb 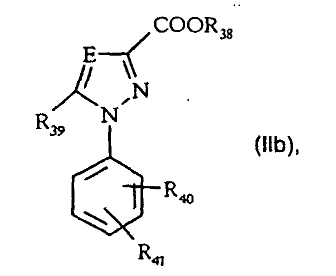
worin E Stickstoff oder Methin;
R₃₈ C₁-C₄-Alkyl;
R₃₉ -CCl₃, Phenyl oder durch Halogen substituiertes Phenyl, und
R₄₀ und R₄₁ unabhängig voneinander Wasserstoff oder Halogen bedeuten; enthält.

Die in den Substituentendefinitionen vorkommenden Alkylgruppen können geradkettig oder verzweigt sein und stehen beispielsweise für Methyl, Ethyl, Propyl, Butyl sowie deren verzweigte Isomeren. Halogen bedeutet in der Regel Fluor, Chlor, Brom oder Jod, vorzugsweise Fluor, Chlor oder Brom. Der Begriff "substituiert" kann im Rahmen der vorliegenden Erfindung einfach und - soweit möglich - auch mehrfach substituiert bedeuten.

Die Verbindung der Formel I ist in der EP-A-0 507171 beschrieben. Verbindungen der Formel IIb sind aus US-A-5,541,148, EP-A-0 268 554, EP-A-0 174 562, WO 91/7874, WO 94/987, WO 96/29870 sowie WO 97/18712 bekannt.

Besonders bevorzugte Verbindungen der Formeln IIb sind in der folgenden Tabelle aufgeführt:

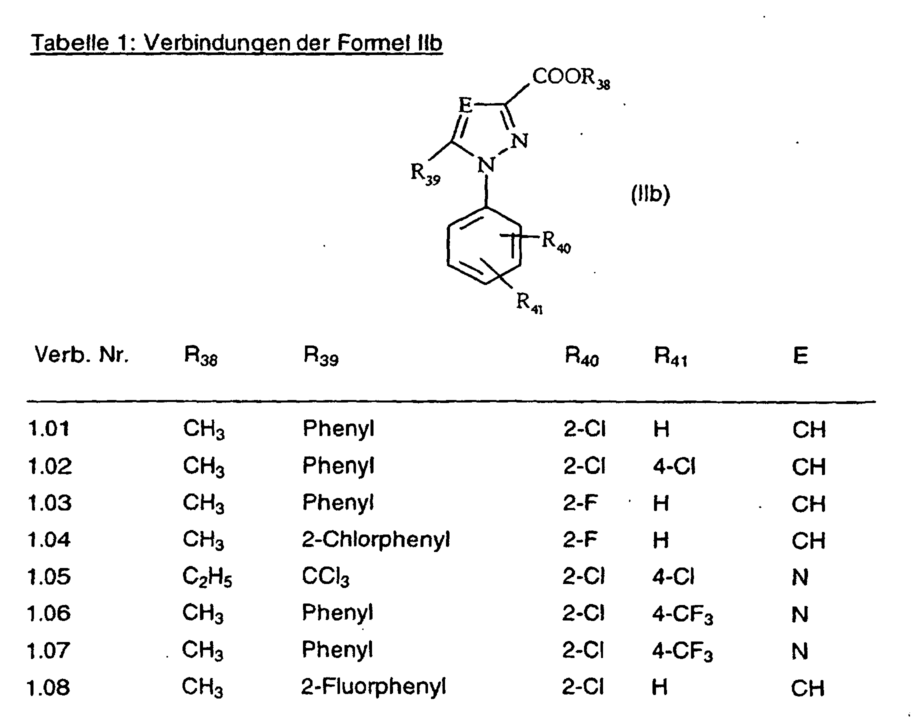

Die Erfindung betrifft auch ein Verfahren zum selektiven Bekämpfen von Unkräutern und Gräsern in Nutzpflanzenkulturen, welches darin besteht, daß man die Nutzpflanzen, deren Samen oder Stecklinge oder deren Anbaufläche gleichzeitig oder getrennt mit einer herbizid wirksamen Menge des Herbizids der Formel I und einer herbizid-antagonistisch wirksamen Menge des Safeners der Formel IIb behandelt.

Als Kulturpflanzen, welche durch die Safener der Formel IIb gegen die schädigende Wirkung der oben erwähnten Herbizide geschützt werden können, kommen insbesondere Getreide und Reis in Betracht. Unter Kulturen sind auch solche zu verstehen, die durch konventionelle züchterische oder gentechnologische Methoden gegen Herbizide bzw. Herbizidklassen tolerant gemacht worden sind.

Bei den zu bekämpfenden Unkräutern kann es sich sowohl um monokotyle wie um dikotyle Unkräuter handeln, wie zum Beispiel Stellaria, Nasturtium, Agrostis, Digitaria, Avena, Setaria, Sinapis, Lolium, Solanum, Echinochloa, Scirpus, Monochoria, Sagittaria, Bromus, Alopecurus, Sorghum halepense, Rottboellia, Cyperus, Abutilon, Sida, Xanthium, Amaranthus, Chenopodium, Ipomoea, Chrysanthemum, Galium, Viola und Veronica.

Als Anbauflächen gelten die bereits mit den Kulturpflanzen bewachsenen oder mit dem Saatgut dieser Kulturpflanzen beschickten Bodenareale wie auch die zur Bebauung mit diesen Kulturpflanzen bestimmten Böden.

Ein Safener der Formel II kann je nach Anwendungszweck zur Vorbehandlung des Saatgutes der Kulturpflanze (Beizung des Samens oder der Stecklinge) eingesetzt oder vor oder nach der Saat in den Boden gegeben werden. Er kann aber auch für sich allein oder zusammen mit dem Herbizid nach dem Auflaufen der Pflanzen appliziert werden. Die Behandlung der Pflanzen oder des Saatgutes mit dem Safener kann daher grundsätzlich unabhängig vom Zeitpunkt der Applikation des Herbizids erfolgen. Die Behandlung der Pflanze kann man jedoch auch durch gleichzeitige Applikation von Herbizid und Safener (z.B. als Tankmischung) vornehmen. Die zu applizierende Aufwandmenge Safener zu Herbizid richtet sich weitgehend nach der Anwendungsart. Bei einer Feldbehandlung, welche entweder unter Verwendung einer Tankmischung mit einer Kombination von Safener und Herbizid oder durch getrennte Applikation von Safener und Herbizid erfolgt, liegt in der Regel ein Verhältnis von Herbizid zu Safener von 1:100 bis 1:1, bevorzugt 1:50 bis 5:1.

In der Regel werden bei der Feldbehandlung 0,001 bis 5,0 kg Safener/ha, vorzugsweise 0,001 bis 0,5 kg Safener/ha, appliziert.

Die Aufwandmengen an Herbizid liegt in der Regel zwischen 0,001 bis 2 kg/ha, vorzugsweise jedoch zwischen 0,005 bis 1 kg/ha.

Die erfindungsgemäßen Mittel sind für alle in der Landwirtschaft üblichen Apptikationsmethoden wie z.B. preemergente Applikation, postemergente Applikation und Saatbeizung geeignet.

Bei der Samenbeizung werden im allgemeinen 0,001 bis 10 g Safener/kg Samen, vorzugsweise 0,05 bis 2 g Safener/kg Samen, appliziert. Wird der Safener in flüssiger Form kurz vor der Aussaat unter Samenquellung appliziert, so werden zweckmäßigerweise Safenerlösungen verwendet, welche den Wirkstoff in einer Konzentration von 1 bis 10000, vorzugsweise von 100 bis 1000 ppm, enthalten.

Zur Applikation werden die Safener der Formel II oder Kombinationen von diesen Safenern mit den Herbiziden der Formel I zweckmäßigerweise zusammen mit den in der Formulierungstechnik üblichen Hilfsmitteln zu Formulierungen verarbeitet, z.B. zu Emulsionskonzentraten, streichfähigen Pasten, direkt versprühbaren oder verdünnbaren Lösungen, verdünnten Emulsionen, Spritzpulvern, löslichen Pulvern, Stäubemitteln, Granulaten oder Mikrokapseln.

Solche Formulierungen sind beispielsweise in der WO 97/34485 auf den Seiten 9 bis 13 beschrieben. Die Formulierungen werden in bekannter Weise hergestellt, z.B. durch inniges Vermischen und/oder Vermahlen der Wirkstoffe mit flüssigen oder festen Formulierungshilfsmitteln wie z.B. Lösungsmitteln oder festen Trägerstoffen. Ferner können zusätzlich oberflächenaktive Verbindungen (Tenside) bei der Herstellung der Formulierungen verwendet werden. Für diesen Zweck geeignete Lösungsmittel und feste Trägerstoffe sind z.B. in der WO 97/34485 auf der Seite 6 angegeben.

Als oberflächenaktive Verbindungen kommen je nach der Art des zu formulierenden Wirkstoffes der Formel I nichtionogene, kation- und/oder anionaktive Tenside und Tensidgemische mit guten Emulgier-, Dispergier- und Netzeigenschaften in Betracht. Beispiele für geeignete anionische, nichtionische und kationische Tenside sind beispielsweise in der WO 97/34485 auf den Seiten 7 und 8 aufgezählt. Femer sind auch die in der Formulierungstechnik gebräuchlichen Tenside, die u.a. in "Mc Cutcheon's Detergents and Emulsifiers Annual" MC Publishing Corp., Ridgewood New Jersey, 1981, Stache, H., "Tensid-Taschenbuch", Carl Hanser Verlag, München/Wien, 1981 und M. und J. Ash, "Encyclopedia of Surfactants", Vol I-III, Chemical Publishing Co., New York, 1980-81 beschrieben sind, zur Herstellung der erfindungsgemäßen herbiziden Mittel geeignet.

Die herbiziden Formulierungen enthalten in der Regel 0,1 bis 99 Gew%, insbesondere 0,1 bis 95 Gew.-% Wirkstoffgemisch aus der Verbindung der Formel I mit den Verbindungen der Formel IIb, 1 bis 99,9 Gew.% eines festen oder flüssigen Formulierungshilfstoffes und 0 bis 25 Gew.%, insbesondere 0,1 bis 25 Gew.% eines Tensides.

Während als Handelsware üblicherweise konzentrierte Mittel bevorzugt werden, verwendet der Endverbraucher in der Regel verdünnte Mittel.

Die Mittel können auch weitere Zusätze wie Stabilisatoren z.B. gegebenenfalls epoxydierte Pflanzenöle (epoxydiertes Kokosnußöl, Rapsöl oder Sojaöl), Entschäumer, z.B. Silikonöl, Konservierungsmittel, Viskositätsregulatoren, Bindemittel, Haftmittel sowie Dünger oder andere Wirkstoffe enthalten. Für die Verwendung von Safenern der Formel II oder sie enthaltender Mittel zum Schützen von Kulturpflanzen gegen schädigende Wirkungen von Herbiziden der Formell kommen verschiedene Methoden und Techniken in Betracht, wie beispielsweise die folgenden:

### i) Samenbeizung

a) Beizung der Samen mit einem als Spritzpulver formulierten Wirkstoff der Formel II durch Schütteln in einem Gefäß bis zur gleichmäßigen Verteilung auf der Samenoberfläche (Trockenbeizung). Man verwendet dabei etwa 1 bis 500 g Wirkstoff der Formel IIb (4 g bis 2 kg Spritzpulver) pro 100 kg Saatgut.
b) Beizung der Samen mit einem Emulsionskonzentrat des Wirkstoffs der Formel IIb nach der Methode a) (Naßbeizung).
c) Beizung durch Tauchen des Saatguts in eine Brühe mit 100-1000 ppm Wirkstoff der Formel IIb während 1 bis 72 Stunden und gegebenenfalls nachfolgendes Trocknen der Samen (Tauchbeizung).

Die Beizung des Saatguts oder die Behandlung des angekeimten Sämlings sind naturgemäß die bevorzugten Methoden der Applikation, weil die Wirkstoffbehandlung vollständig auf die Zielkultur gerichtet ist. Man verwendet in der Regel 1 bis 1000 g Antidot, vorzugsweise 5 bis 250 g Antidot, pro 100 kg Saatgut, wobei man je nach Methodik, die auch den Zusatz anderer Wirkstoffe oder Mikronährstoffe ermöglicht, von den angegebenen Grenzkonzentrationen nach oben oder unten abweichen kann (Wiederholungsbeize).

### ii) Applikation als Tankmischung

Eine flüssige Aufarbeitung eines Gemisches von Antidot und Herbizid (gegenseitiges Mengenverhältnis zwischen 10:1 und 1:100) wird verwendet, wobei die Aufwandmenge an Herbizid 0,005 bis 5,0 kg pro Hektar beträgt. Solche Tankmischungen werden vor oder nach der Aussaat appliziert.

### iii) Applikation in der Saatfurche

Der Wirkstoff der Formel IIb wird als Emulsionskonzentrat, Spritzpulver oder als Granulat in die offene besäte Saatfurche eingebracht. Nach dem Decken der Saatfurche wird in üblicher Weise das Herbizid im Vorauflaufverfahren appliziert.

### iv) Kontrollierte Wirkstoffabgabe

Der Wirkstoff der Formel IIb wird in Lösung auf mineralische Granulatträger oder polymerisierte Granulate (Harnstoff/Formaldehyd) aufgezogen und getrocknet. Gegebenenfalls kann ein Überzug aufgebracht werden (Umhüllungsgranulate), der es erlaubt, den Wirkstoff über einen bestimmten Zeitraum dosiert abzugeben.

Insbesondere setzen sich bevorzugte Formulierungen folgendermaßen zusammen: (% = Gewichtsprozent)

### Emulgierbare Konzentrate:

| | |
|---|---|
| Aktives Wirkstoffgemisch | 1 bis 90 %, vorzugsweise 5 bis 20 % |
| oberflächenaktives Mittel | 1 bis 30 %, vorzugsweise 10 bis 20 % |
| flüssiges Trägermittel | 5 bis 94 %, vorzugsweise 70 bis 85 % |

### Stäube:

| | |
|---|---|
| Aktives Wirkstoffgemisch | 0,1 bis 10 %, vorzugsweise 0,1 bis 5 % |
| festes Trägermittel | 99,9 bis 90 %, vorzugsweise 99,9 bis 99 % |

### Suspensions-Konzentrate:

| | |
|---|---|
| Aktives Wirkstoffgemisch | 5 bis 75 %, vorzugsweise 10 bis 50 % |
| Wasser | 94 bis 24 %, vorzugsweise 88 bis 30 % |
| oberflächenaktives Mittel | 1 bis 40 %, vorzugsweise 2 bis 30 % |

### Benetzbare Pulver:

| | |
|---|---|
| Aktives Wirkstoffgemisch | 0,5 bis 90 %, vorzugsweise 1 bis 80 % |
| oberflächenaktives Mittel | 0,5 bis 20 %, vorzugsweise 1 bis 15 % |
| festes Trägermaterial | 5 bis 95 %, vorzugsweise 15 bis 90 % |

### Granulate:

| | |
|---|---|
| Aktives Wirkstoffgemisch | 0,1 bis 30 %, vorzugsweise 0,1 bis 15 % |
| festes Trägermittel | 99,5 bis 70 %, vorzugsweise 97 bis 85 % |

Die folgenden Beispiele erläutern die Erfindung weiter, ohne sie zu beschränken.

### Formulierungsbeispiele für Mischungen aus Herbiziden der Formel I und Safener der Formel IIb (% = Gewichtsprozent)

| F1. Emulsionskonzentrate | a) | b) | c) | d) |
|---|---|---|---|---|
| Wirkstoffgemisch | 5 % | 10 % | 25 % | 50 % |
| Ca-Dodecylbenzolsulfonat | 6 % | 8 % | 6 % | 8 % |
| Ricinusöl-polyglykolether (36 Mol EO) | 4 % | - | 4 % | 4 % |
| Octylphenol-polyglykolether (7-8 Mol EO) | - | 4 % | - | 2 % |
| Cyclohexanon | - | - | 10 % | 20 % |
| Arom. Kohlenwasserstoffgemisch C₉-C₁₂ | 85 % | 78 % | 55 % | 16 % |

Aus solchen Konzentraten können durch Verdünnung mit Wasser Emulsionen jeder gewünschten Konzentration hergestellt werden.

| F2. Lösungen | a) | b) | c) | d) |
|---|---|---|---|---|
| Wirkstoffgemisch | 5 % | 10 % | 50 % | 90 % |
| 1-Methoxy-3-(3-methoxy-propoxy)-propan | - | 20 % | 20 % | - |
| Polyethylenglykol MG 400 | 20 % | 10 % | - | - |
| N-Methyl-2-pyrrolidon | - | - | 30 % | 10 % |
| Arom. Kohlenwasserstoffgemisch C₉-C₁₂ | 75 % | 60 % | - | - |

Die Lösungen sind zur Anwendung in Form kleinster Tropfen geeignet.

| F3. Spritzpulver | a) | b) | c) | d) |
|---|---|---|---|---|
| Wirkstoffgemisch | 5 % | 25 % | 50 % | 80 % |
| Na-Ligninsulfonat | 4 % | - | 3 % | - |
| Na-Laurylsulfat | 2 % | 3 % | - | 4 % |
| Na-Diisobutyl-naphthalinsulfonat | - | 6 % | 5 % | 6 % |
| Octylphenol-polyglykolether (7-8 Mol EO) | - | 1 % | 2 % | - |
| Hochdisperse Kieselsäure | 1 % | 3 % | 5 % | 10 % |
| Kaolin | 88 % | 62 % | 35 % | - |

Der Wirkstoff wird mit den Zusatzstoffen gut vermischt und in einer geeigneten Mühle gut vermahlen. Man erhält Spritzpulver, die sich mit Wasser zu Suspensionen jeder gewünschten Konzentration verdünnen lassen.

| F4. Umhüllungs-Granulate | a) | b) | c) |
|---|---|---|---|
| Wirkstoffgemisch | 0.1 % | 5 % | 15 % |
| Hochdisperse Kieselsäure | 0.9 % | 2 % | 2 % |
| Anorg. Trägermaterial | 99.0 % | 93 % | 83 % |
| (Æ 0.1 - 1 mm) | | | |

wie z.B. CaCO₃ oder SiO₂

Der Wirkstoff wird in Methylenchlorid gelöst, auf den Träger aufgesprüht und das Lösungsmittel anschließend im Vakuum abgedampft.

| F5. Umhüllungs-Granulate | a) | b) | c) |
|---|---|---|---|
| Wirkstoffgemisch | 0.1 % | 5 % | 15 % |
| Polyethylenglykol MG 200 | 1.0 % | 2 % | 3 % |
| Hochdisperse Kieselsäure | 0.9 % | 1 % | 2 % |
| Anorg. Trägermaterial | 98.0 % | 92 % | 80 % |
| (Æ 0 1 - 1 mm) | | | |

wie z.B. CaCO₃ oder SiO₂

Der fein gemahlene Wirkstoff wird in einem Mischer auf das mit Polyethylenglykol angefeuchtete Trägermaterial gleichmäßig aufgetragen. Auf diese Weise erhält man staubfreie Umhüllungs-Granulate.

| F6. Extruder-Granulate | a) | b) | c) | d) |
|---|---|---|---|---|
| Wirkstoffgemisch | 0.1 % | 3 % | 5 % | 15 % |
| Na-Ligninsulfonat | 1.5 % | 2 % | 3 % | 4 % |
| Carboxymethylcellulose | 1.4 % | 2 % | 2 % | 2 % |
| Kaolin | 97.0 % | 93 % | 90 % | 79 % |

Der Wirkstoff wird mit den Zusatzstoffen vermischt, vermahlen und mit Wasser angefeuchtet. Dieses Gemisch wird extrudiert und anschließend im Luftstrom getrocknet.

| F7. Stäubemittel | a) | b) | c) |
|---|---|---|---|
| Wirkstoffgemisch | 0.1 % | 1 % | 5 % |
| Talkum | 39.9 % | 49 % | 35 % |
| Kaolin | 60.0 % | 50 % | 60 % |

Man erhält anwendungsfertige Stäubemittel, indem der Wirkstoff mit den Trägerstoffen vermischt und auf einer geeigneten Mühle vermahlen wird.

| F8. Suspensions-Konzentrate | a) | b) | c) | d) |
|---|---|---|---|---|
| Wirkstoffgemisch | 3 % | 10 % | 25 % | 50 % |
| Ethylenglykol | 5 % | 5 % | 5 % | 5 % |
| Nonylphenol-polyglykolether (15 Mol EO) | - | 1 % | 2 % | - |
| Na-Ligninsulfonat | 3 % | 3 % | 4 % | 5 % |
| Carboxymethylcellulose | 1 % | 1 % | 1 % | 1 % |
| 37%ige wäßrige Formaldehyd-Lösung | 0.2 % | 0.2 % | 0.2 % | 0.2 % |
| Silikonöl-Emulsion | 0.8 % | 0.8 % | 0.8 % | 0.8 % |
| Wasser | 87 % | 79 % | 62 % | 38 % |

Der feingemahlene Wirkstoff wird mit den Zusatzstoffen innig vermischt. Man erhält so ein Suspensions-Konzentrat, aus welchem durch Verdünnen mit Wasser Suspensionen jeder gewünschten Konzentration hergestellt werden können.

Es ist oft praktischer, den Wirkstoff der Formel I und den Mischungspartner der Formel IIb einzeln zu formulieren und sie dann kurz vor dem Ausbringen im Applikator im gewünschten Mischungsverhältnis als "Tankmischung" im Wasser zusammenzubringen.

Die Fähigkeit der Safener der Formel IIb Kulturpflanzen vor der phytotoxischen Wirkung von Herbiziden der Formel I zu schützen, wird in den folgenden Beispielen veranschaulicht.

### Biologische Beispiele

### Beispiel B1: Post-emergente Anwendungen von Mischungen eines Herbizids der Formel I mit einem Safener der Formel IIb auf Gerste:

Unter Gewächshausbedingungen wird Gerste in Kunststofftöpfen bis zum 2,5-Blattstadium angezogen. In diesem Stadium werden zum einen das Herbizid der Formel allein als auch die Mischung des Herbizids mit einem Safener der Formeln IIb auf die Testpflanzen appliziert. Die Applikation erfolgt als wäßrige Suspension der Prüfsubstanzen (Formulierungsbeispiele F3 a) und b)) mit 5001 Wasser/ha. 10 Tage nach der Applikation wird mit einer Prozentskala ausgewertet. Die erhaltenen Resultate zeigen, daß mit den Safenern der Formel IIb die durch das Herbizid der Formel I verursachte Schädigung auf Gerste deutlich reduziert werden kann.

Beispiele für die selektive Wirkung der erfindungsgemäßen Mittel sind in den Tabellen B1 bis B3 gegeben:

**Tabelle B1:**

| Pflanze: | Herbizid der Formel I: 60 g/ha | Herbizid der Formel I: 60 g/ha Safener Nr. 1.05: 15 g/ha |
|---|---|---|
| Gerste | 40 | 30 |
| Chenopodium | 90 | 90 |
| Emex | 90 | 90 |
| Raphanus | 80 | 90 |
| Setaria | 80 | 80 |

**Tabelle B2:**

| Pflanze: | Herbizid der Formel I: 60 g/ha | Herbizid der Formel I: 60 g/ha Safener Nr. 1.01: 15 g/ha |
|---|---|---|
| Gerste | 40 | 10 |
| Chenopodium | 90 | 90 |
| Emex | 90 | 90 |
| Raphanus | 80 | 80 |
| Setaria | 80 | 70 |

**Tabelle B3:**

| Pflanze: | Herbizid der Formel I: 15 g/ha | Herbizid der Formel I: 15 g/ha Safener Nr. 2.01: 4 g/ha |
|---|---|---|
| Gerste | 30 | 0 |
| Chenopodium | 90 | 90 |
| Emex | 80 | 90 |
| Raphanus | 80 | 80 |
| Setaria | 70 | 70 |

Dieselben Resultate werden erhalten, wenn man die Verbindung der Formel I und IIb gemäß den Beispielen F1, F2 und F4 bis F7 formuliert.

### Beispiel B2: Post-emergente Anwendungen von Mischungen eines Herbizids der Formel I mit einem Safener der Formel IIb auf Hartweizen:

Unter Gewächshausbedingungen wird Hartweizen in Kunststofftöpfen bis zum 2,5-Blattstadium angezogen. In diesem Stadium werden zum einen das Herbizid der Formel I allein als auch die Mischung des Herbizids mit einem Safener der Formeln IIb auf die Testpflanzen appliziert. Die Applikation erfolgt als wäßrige Suspension der Prüfsubstanzen (Formulierungsbeispiele F3 a) und b)) mit 500l Wasser/ha. 10 Tage nach der Applikation wird mit einer Prozentskala ausgewertet. Die erhaltenen Resultate zeigen, daß mit den Safenern der Formeln IIb die durch das Herbizid der Formel I verursachte Schädigung auf Hartweizen deutlich reduziert werden kann. Beispiele für die selektive Wirkung der erfindungsgemäßen Mittel sind in der Tabelle B4 gegeben:

**Tabelle B4:**

| Pflanze: | Herbizid der Formel I: 250 g/ha | Herbizid der Formel I: 250 g/ha Safener Nr. 1.01: 60 g/ha |
|---|---|---|
| Hartweizen | 30 | 10 |
| Chenopodium | 90 | 95 |
| Emex | 90 | 90 |
| Raphanus | 90 | 80 |
| Setaria | 80 | 80 |

## Patentansprüche

1. Selektiv-herbizides Mittel, **dadurch gekennzeichnet, daß** es neben üblichen inerten Formulierungshilfsmitteln als Wirkstoff eine Mischung aus
a) einer herbizid-wirksamen Menge des Herbizids der Formel I 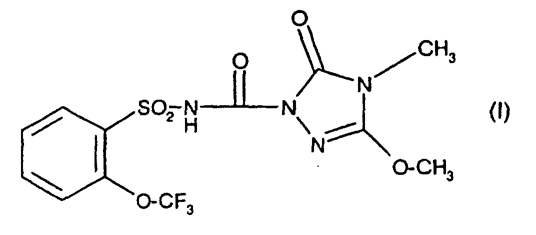 und
b) einer herbizid-antagonistisch wirksamen Menge eines Safeners der Formel IIb 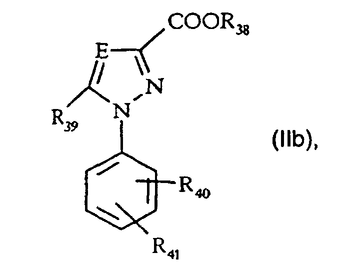
worin E Stickstoff oder Methin;
R₃₈ C₁-C₄-Alkyl;
R₃₉ -CCl₃, Phenyl oder durch Halogen substituiertes Phenyl, und
R₄₀ und R₄₁ unabhängig voneinander Wasserstoff oder Halogen bedeuten; enthält.

2. Verfahren zum selektiven Bekämpfen von Unkräutern und Gräsern in Nutzpflanzenkulturen, **dadurch gekennzeichnet, daß** man die Nutzpflanzen, deren Samen oder Stecklinge oder deren Anbaufläche mit einer herbizid wirksamen Menge eines Herbizids der Formel I und einer herbizid-antagonistisch wirksamen Menge eines Safeners der Formel IIb behandelt.

3. Verfahren gemäß Anspruch 2, **dadurch gekennzeichnet, daß** man Nutzpflanzenkulturen oder Anbauflächen für die Nutzpflanzenkulturen mit 0,001 bis 2 kg/ha eines Herbizids der Formel I gemäß Anspruch 1 und einer Menge von 0,001 bis 0,5 kg/ha eines Safeners der Formel IIb gemäß Anspruch 1 behandelt.

4. Verfahren gemäß Anspruch 2, **dadurch gekennzeichnet, daß** es sich bei den Nutzpflanzenkulturen um Getreide oder Reis handelt.

## Claims

1. A selectively herbicidal composition which, in addition to comprising customary inert formulation adjuvants, comprises as active ingredient a mixture of
a) a herbicidally effective amount of the herbicide of formula I 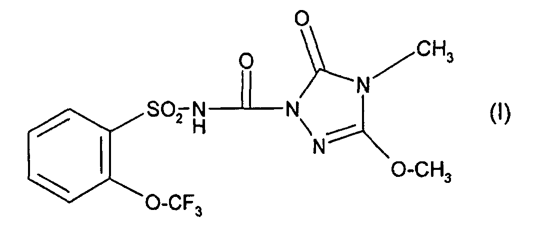 and
b) an amount, effective for herbicide antagonism, of a safener of formula IIb 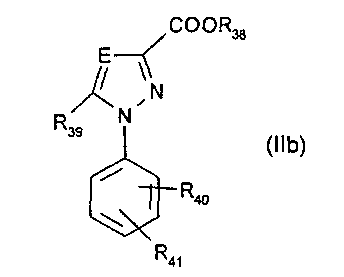
wherein E is nitrogen or methine;
R₃₈ is C₁-C₄alkyl;
R₃₉ is -CCl₃, phenyl or halo-substituted phenyl, and
R₄₀ and R₄₁ are each independently of the other hydrogen or halogen.

2. A method of selectively controlling weeds and grasses in crops of useful plants, which comprises treating the useful plants or seeds or seedlings thereof or the area under cultivation with a herbicidally effective amount of a herbicide of formula I and an amount, effective for herbicide antagonism, of a safener of formula IIb.

3. A method according to claim 2, wherein a crop of useful plants or an area of cultivation for the crop of useful plants is treated with from 0.001 to 2 kg/ha of a herbicide of formula I according to claim 1 and an amount of from 0.001 to 0.5 kg/ha of a safener of formula IIb according to claim 1.

4. A method according to claim 2, wherein the crop of useful plants is a cereal or rice.

## Revendications

1. Agent herbicide sélectif, **caractérisé en ce que**, outre des adjuvants de formulation usuels, il contient comme principe actif un mélange
a) d'une quantité herbicide efficace de l'herbicide de formule I 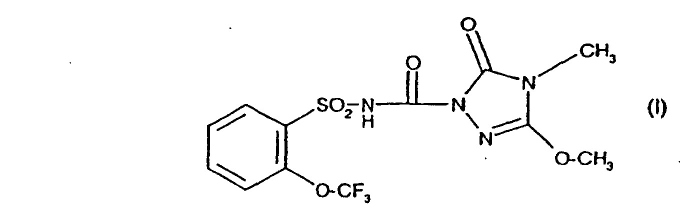 et
b) d'une quantité efficace en tant qu'antagoniste de l'herbicide d'un safener de formule IIb 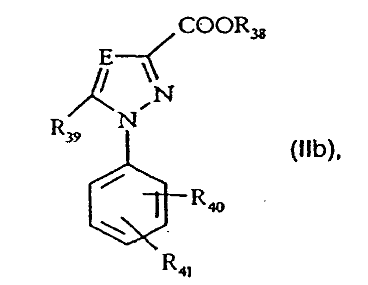
dans laquelle
E est azote ou méthine ;
R₃₈ est alkyle en C₁ à C₄ ;
R₃₉ est -CCl₃, phényle ou phényle substitué par un halogène, et
R₄₀ et R₄₁ sont indépendamment l'un de l'autre un hydrogène ou un halogène.

2. Procédé pour lutter sélectivement contre les mauvaises herbes et les herbes dans les cultures de plantes utiles, **caractérisé en ce que** l'on traite les plantes utiles, leurs semences ou leurs plants ou leur aire de plantation avec une quantité herbicide efficace d'un herbicide de formule I et une quantité efficace en tant qu'antagoniste de l'herbicide d'un safener de formule IIb.

3. Procédé selon la revendication 2, **caractérisé en ce que** l'on traite les cultures de plantes utiles ou les aires de plantation des cultures de plantes utiles avec 0,001 à 2 kg/ha d'un herbicide de formule I selon la revendication 1 et une quantité de 0,001 à 0,5 kg/ha d'un safener de formule IIb selon la revendication 1.

4. Procédé selon la revendication 2, **caractérisé en ce que** les cultures de plantes utiles sont des céréales ou du riz.
